# EUROPEAN PATENT SPECIFICATION

(11) **EP 3 261 206 B1**
(45) Date of publication and mention of the grant of the patent: **16.06.2021**
(21) Application number: 16752432.1
(22) Date of filing: 15.02.2016
(51) Int. Cl.: H02G 9/04

(54) **CABLE TROUGH FOR CORNERS**
KABELKANAL FÜR ECKEN
CHEMIN DE CÂBLES POUR COINS

(30) Priority: 17.02.2015 JP 2015028128
(43) Date of publication of application: 27.12.2017
(73) Proprietor: East Japan Railway Company, Tokyo 151-8578 (JP); Furukawa Electric Co., Ltd., Chiyoda-ku Tokyo 100-8322 (JP)
(72) Inventor: KARASAWA, Tsubasa, Tokyo 151-8578 (JP); KANESAWA, Hiroyuki, Tokyo 151-8578 (JP); EGASHIRA, Yuki, Tokyo 151-8578 (JP); KOZAWA, Satoshi, Tokyo 100-8322 (JP); KIMURA, Yasuki, Tokyo 100-8322 (JP)
(74) Representative: Grünecker Patent- und Rechtsanwälte PartG mbB
(86) International application number: PCT/JP2016/054293
(87) International publication number: WO 2016/133046

(56) References cited:
- WO-A1-02/086576
- DE-U1-202006 006 756
- JP-A- H06 284 544
- JP-A- 2014 011 881
- JP-U- H0 515 622

## Description

### Technical Field

The present invention relates to a cable trough for corners, which trough is installed near a railroad track and the like and suitable for installment along a curved route.

### Background Art

Heretofore, multiple cable troughs each having a male joint at one end and a female joint at the other end are coupled in a longitudinal direction by inserting the male joint of one of the cable troughs to the female joint of the adjoining cable trough, for installation of the cable troughs in a predetermined area (refer to Patent Document 1, for example).

In some cases, the cable troughs should be installed along a curved route in a narrow railway land, to circumvent other facilities.

Curved cable trough products are commercially available. Unfortunately, sometimes their curvatures do not match the route along which the cable trough products are to be installed. In such a case, multiple trough pieces prepared by cutting long cable troughs may be disposed along the curved route with mortar interfilling, for example, provided between the trough pieces.

Patent Document 2 discloses the preamble of claim 1. Patent Documents 3 and 4 disclose further cable troughs for corners according to the prior art Patent document JPH0515622U discloses a curved cable trough that has interlocking female and male parts, each with a single shape that allows for both a left and right tilt.

Patent Document 1: Japanese Patent Application Laid-Open Publication No. 2009-81995
Patent Document 2: DE 202006006756 U1
Patent Document 3: WO 02086576 A1
Patent Document 4: JP H06284544 A

### Summary of the Invention

### Problems to Be Solved by the Invention

As in the conventional art described above, the process of cutting the cable troughs and connecting multiple trough pieces with mortar at a construction site is inefficient and tends to lead to an uneven finish.

An object of the present invention is to provide a cable trough for corners, which trough can be readily disposed along a curved route.

### Means for Solving the Problems

To accomplish the above object, there is provided a cable trough for corners according to claim 1.

In the cable trough for comers having such a configuration, the relative orientation between the male trough body and the female trough body can be varied while the coupled state is maintained. Thus, in the cable trough for corners including the male trough body coupled to the female trough body, the relative orientation between the male trough body and the female trough body can be varied at the coupling sites, to bend the cable trough for corners.

In this way, the cable trough for corners including the male trough body having male joints at the both edges, coupled to the female trough body having female joints at the two ends, by alternatively coupling the male joints and the female joints can be bent by varying the relative orientation between the male trough body and the female trough body at a coupling site.

Such a cable trough for corners can be readily bent and placed along a curved route to conform to the curvature of the curved route.

Preferably, the cable trough for corners further includes: a first lid disposed across the pair of first side walls on the male trough body; a second lid disposed across the pair of second side walls on the female trough body, and the first bottom wall has a lower face having bottom protrusions protruding downward from both edges of the lower face, and the second bottom wall has an upper face having a bottom depression into which the bottom protrusions are inserted, the first top lid has an upper face having lid protrusions protruding upward from both edges of the upper face, and the second lid has a lower face having a lid depression into which the lid protrusions are inserted, and the bottom protrusions are movably inserted into the bottom depression, and the lid protrusions are movably inserted into the lid depression.

In the assembly that includes the male trough including a male trough body and a first lid disposed thereon and the female trough including a female trough body and a second lid disposed thereon, the bottom protrusions are movably inserted into the bottom depression, and the lid protrusions are movably inserted into the lid depression. Thus, the relative orientation can be varied between the male trough body and the female trough body.

In this way, the cable trough for corners including the first lid disposed on the male trough body and the second lid disposed on the female trough body can be coupled at a bent state.

Preferably, the cable trough for corners further includes: a lid fixing member which fixes the second lid to the female trough body.

The first lid disposed on the male trough body is urged by the second lid dispose on the female trough body. Thus, the second lid can be fixed to the female trough body with the lid fixing member such that the first lid is firmly fixed to the male trough body.

In specific, the second lid and the first lid can be firmly fixed to the female trough body and the male trough body, respectively, with the lid fixing member for fixing the second lid to the female trough body.

### Advantageous Effects of the Invention

The present invention provides a cable trough for corners, which trough can be readily placed along a curved route.

### Brief Description of Drawings

Fig. 1 is a perspective view of a cable trough for corners according to an embodiment.
Fig. 2 is an exploded perspective view of a male trough.
Fig. 3A is an exploded perspective view of a female trough.
Fig. 3B is a perspective bottom view of a second lid.
Fig. 4A is an explanatory drawing of a coupling structure of female and male troughs illustrating top views of female and male trough bodies.
Fig. 4B is an explanatory drawing of the coupling structure of the female and male troughs illustrating a coupled state of the female and male trough bodies.
Fig. 4C is an explanatory drawing of the coupling structure of the female and male troughs illustrating a coupled state of the female and male trough bodies where orientations thereof are varied relative to each other.
Fig. 4D is an explanatory drawing of the coupling structure of female and male troughs illustrating a curved state of the cable trough for corners.
Fig. 5 is an explanatory drawing of example installation of the cable troughs for corners.
Fig. 6A is a top view of an example cable trough having a male joint at one end and a female joint at the other end.
Fig. 6B is an explanatory drawing of an assembly of cable troughs each having a male joint at one end and a female joint at the other end.
Fig. 7A is a top view of an example cable trough having a male joint at one end and a female joint at the other end.
Fig. 7B is an explanatory drawing of an assembly of the cable troughs each having the male joint at one end and the female joint at the other end.
Fig. 8 is an explanatory drawing of a comparison of the cable trough for corners according to the embodiment and the assembly of the cable troughs illustrated in Fig. 7B.

### Best Mode for Carrying Out the Invention

A cable trough for corners according to embodiments of the present invention will now be described in detail with reference to the accompanying drawings. The following embodiments and the attached drawings feature various technically preferred configurations for accomplishing the present invention.

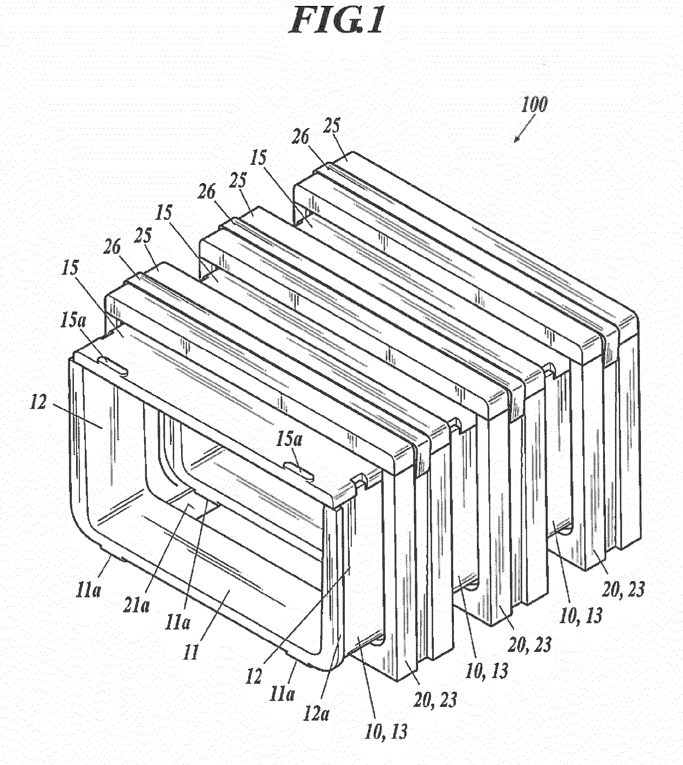

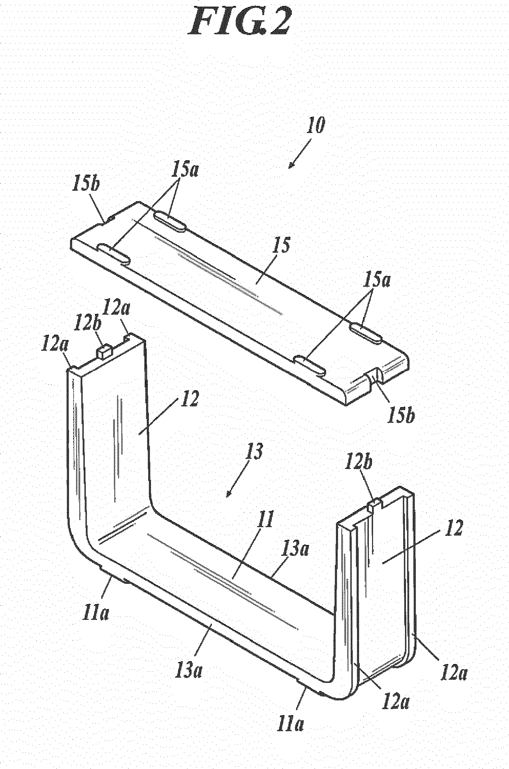

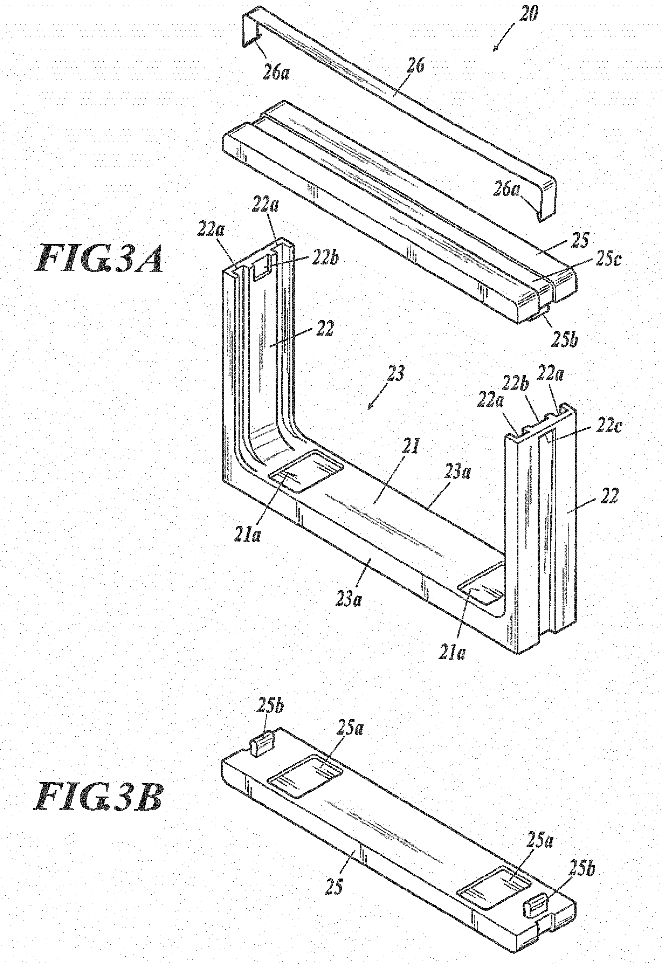

Fig. 1 is a perspective view of a cable trough 100 for corners. Fig. 2 is an exploded perspective view of a male trough 10. Fig. 3A and 3B are exploded perspective views of a female trough 20.

With reference to Fig. 1, the cable trough 100 for corners according to this embodiment includes alternatingly coupled male troughs 10 and female troughs 20 (three each in Fig. 1).

With reference to Figs. 1 and 2, the male trough 10 includes a male trough body 13 having a substantially U-shape cross-section and having a first bottom wall 11, and a pair of first side walls 12; and a substantially planar first lid 15 covering the male trough body 13 across the pair of first side walls 12.

The male trough body 13 and the first lid 15 are composed of a resin material, such as resin containing recycled plastic.

Bottom protrusions 11a protrude downward from each of the two ends of the bottom face of the first bottom wall 11 of the male trough body 13.

Side beams 12a protrude externally from the two edges of the external face of each of the first side walls 12 of the male trough body 13.

The two substantially U-shaped peripheries of the male trough body 13, which include the bottom protrusions 11a and the side beams 12a, function as male joints 13a and 13a.

The top faces of the first side walls 12 are provided with projections 12b for alignment of the first lid 15.

Lid protrusions 15a protrude upward from each of the two ends of the top face of the first lid 15.

Engaging chases 15b that engage with the projections 12b of the male trough body 13 (first side walls 12) are disposed at the center of each of the longitudinal ends of the first lid 15.

The first lid 15 is disposed on the male trough body 13 to assemble the first lid 15 and the male trough body 13 into the male trough 10.

Each of the bottom protrusions 11a of the first bottom wall 11 of the male trough body 13 has substantially the same shape as each of the lid protrusions 15a of the first lid 15. The bottom protrusions 11a and the respective lid protrusions 15a are designed to align in the vertical direction in an assembled state of the male trough 10.

With reference to Figs. 1, 3A, and 3B, the female trough 20 includes a female trough body 23 having a substantially U-shaped cross-section and having a second bottom wall 21 and a pair of second side walls 22; a substantially planar second lid 25 covering the female trough body 23 across the pair of second side walls 22; and a lid fixing member 26 that fixes the second lid 25 to the female trough body 23.

The female trough body 23 and the second lid 25 are composed of a resin material, such as resin containing recycled plastic.

The lid fixing member 26 is a bent metal plate composed of, for example, stainless steel.

Bottom depressions 21a into each of which the bottom protrusions 11a of the male trough body 13 are to be inserted are disposed on the upper face of the second bottom wall 21 of the female trough body 23.

Side grooves 22a into each of which the side beams 12a of the male trough body 13 are to be fitted are disposed at both edges of each of the inner faces of the two second side walls 22 of the female trough body 23.

The two substantially U-shaped peripheries of the female trough body 23, which include the edges of the bottom depressions 21a and the side grooves 22a, function as female joints 23a and 23a.

The top faces of the second side walls 22 are provided with engaging recesses 22b for alignment of the second lid 25.

The upper external faces of the second side walls 22 are provided with engagements 22c that engage with engaging ends 26a of the lid fixing member 26.

Lid depressions 25a into each of which the lid protrusions 15a of the first lid 15 are to be inserted are disposed on the lower face of the second lid 25 (see Fig. 3B).

Projections 25b that engage with the respective engaging recesses 22b of the female trough body 23 (respective second side walls 22) are disposed on the lower face of the second lid 15 at the two ends in the longitudinal direction.

A long groove 25c in which the lid fixing member 26 is to be fixed is formed in the upper face of the second lid 25.

The second lid 25 is disposed on the female trough body 23 to assemble the second lid 25 and the female trough body 23 into the female trough 20.

Each of the bottom depressions 21a of the second bottom wall 21 of the female trough body 23 has substantially the same shape as each of the lid depressions 25a of the second lid 25. The bottom depressions 21a and the respective lid depressions 25a are designed to align in the vertical direction in an assembled state of the female trough 20.

The process of coupling the male trough 10 and the female trough 20 will now be described.

The side beams 12a of the male trough body 13 are slid from the top ends of the respective side grooves 22a of the female trough body 23 along the side grooves 22a, to fit the side beams 12a of the male trough body 13 to the side grooves 22a of the female trough body 23.

The first bottom wall 11 of the male trough body 13 reaches the second bottom wall 21 of the female trough body 23, and the bottom protrusions 11a of the male trough body 13 are inserted into the corresponding bottom depressions 21a of the female trough body 23.

In this way, the male joints 13a are connected with the respective female joints 23a such that they are overlap each other, and thereby the female trough body 23 and the male trough body 13 are coupled to each other.

Such assembling of the female trough body 23 and the male trough body 13 is repeated to alternatingly couple a predetermined number of female trough bodies 23 and male trough bodies 13.

First lids 15 are then disposed on the respective male trough bodies 13 into male troughs 10.

After the first lids 15 are disposed on all of the male trough bodies 13, second lids 25 are disposed on the respective female trough bodies 23 into female troughs 20. Each second lid 25 is disposed on the corresponding female trough body 23 such that the corresponding lid protrusions 15a of the adjoining first lids 15 are inserted into the lid depressions 25a of the second lid 25.

The lid fixing member 26 is exactly disposed along the long groove 25c of the second lid 25. The engaging ends 26a of the lid fixing member 26 are engaged with the respective engagements 22c of the female trough body 23 to fix the second lid 25 to the female trough body 23.

The male joints 13a (the bottom protrusions 11a and the side beams 12a) of the male trough 10 fit with the female joints 23a (the bottom depressions 21a and the side grooves 22a) of the adjoining female troughs 20. The lid protrusions 15a of the first lids 15 of the male troughs 10 fit with the lid depressions 25a of the second lids 25 of the adjoining female troughs 20. The first lids 15 disposed on the male trough bodies 13 are urged by the second lids 25 disposed on the female trough bodies 23.

Since the second lids 25 are fixed to the female trough bodies 23 with the lid fixing members 26, the first lids 15 are firmly fixed to the male trough bodies 13. In specific, the lid fixing members 26 can fix the second lids 25 and the first lids 15 to the female trough bodies 23 and the male trough bodies 13, respectively.

Assembling the male troughs 10 and the female troughs 20 through such a process can alternatingly couple the male troughs 10 and the female troughs 20 into the cable trough 100 for corners.

The side beams 12a of the male trough bodies 13 are designed to movably fit with the side grooves 22a of the respective female trough bodies 23 in a coupled state of the male troughs 10 and the female troughs 20.

Similarly, the bottom protrusions 11a of the male trough bodies 13 are designed to be movably inserted into the bottom depressions 21a of the respective female trough bodies 23, and the lid protrusions 15a of the first lids 15 are designed to be movably inserted into the lid depressions 25a of the respective second lids 25.

In this way, the side beams 12a and the respective side grooves 22a, the bottom protrusions 11a and the respective bottom depressions 21a, and the lid protrusions 15a and the respective lid depressions 25a movably fit together with each other. Thus, the relative orientation to each other can be varied while the coupled state of the male troughs 10 and the female troughs 20 is maintained, to bend the cable trough 100 for corners.

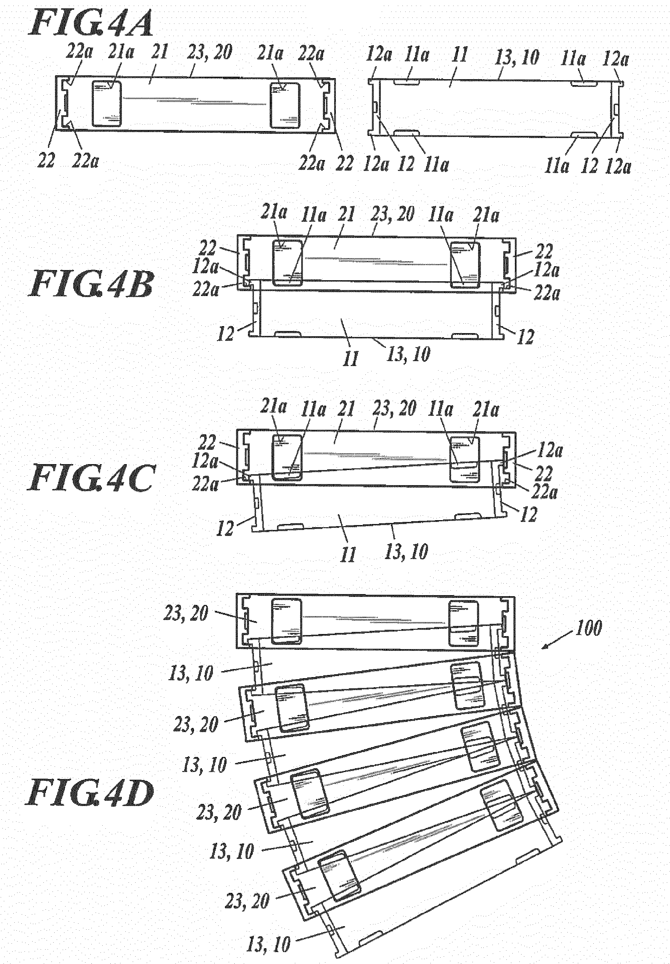

The bending mechanism of the cable trough 100 for corners will now be described with reference to Figs. 4A to 4D.

Figs. 4A to 4D are top views of the female trough bodies 23 and the male trough bodies 13 for simplification of the coupling structure of the female troughs 20 and the male troughs 10.

Since the movement of the lid protrusions 15a of the first lid 15 coincide with the movement of the bottom protrusions 11a of the male trough body 13, and the movement of the lid depressions 25a of the second lid 25 coincides with the movement of the bottom depressions 21a of the female trough body 23, the correspondence of the movements of these components is described.

Fig. 4A is a top view of the female trough body 23 and the male trough body 13.

The top view of the male trough body 13 is considered transparent for the visualization of the bottom protrusions 11a through the male trough body 13 (this is also the same for Figs. 4B to 4D).

With reference to Fig. 4B, when the side grooves 22a of the female trough body 23 fit with the respective side beams 12a of the male trough body 13 to couple the female troughs 20 and the male troughs 10, the bottom protrusions 11a of the male trough body 13 are inserted into the corresponding bottom depressions 21a of the female trough body 23. Although not shown, the lid protrusions 15a of the first lid 15 are inserted into the corresponding lid depressions 25a of the second lid 25.

With reference to Fig. 4C, when one first side wall 12 (the first side wall 12 on the right in the drawing) moves to the interior of the female trough body 23 at an angle to the second side walls 22, the movement of the side beam 12a of the other first side wall 12 (the first side wall 12 on the left in the drawing), which moves relative to the one first side wall 12, is restricted by the corresponding side groove 22a.

At this time, the bottom protrusion 11a on the right in the drawing moves toward the center of the corresponding bottom depression 21a, and the bottom protrusion 11a on the left in the drawing comes into contact with the edge of the corresponding bottom depression 21a. Although not illustrated, the lid protrusion 15a on the right moves toward the center of the corresponding lid depression 25a, and the lid protrusion 15a on the left comes into contact with the edge of the corresponding lid depression 25a.

Similarly, when the other first side wall 12 (the first side wall 12 on the left in the drawing) moves to the interior of the female trough body 23 at an angle to the second side walls 22, the movement of the side beam 12a of the one first side wall 12 (the first side wall 12 on the right in the drawing), which moves relative to the other first side wall 12, is restricted by the corresponding side groove 22a.

In this way, the orientations of the female trough 20 (the female trough body 23) and the male trough 10 (the male trough body 13) can be varied relative to each other while maintaining the coupled state thereof.

In a cable trough 100 for corners including alternatingly coupled multiple female trough bodies 23 (female troughs 20) and multiple male trough bodies 13 (male troughs 10) (four each in Fig. 4D), the orientations of the female troughs 20 and the male troughs 10 relative to each other can be varied at the coupling sites, to bend the cable trough 100 for corners, as illustrated in Fig. 4D.

Such a cable trough 100 for corners can be bent depending on a curvature of a curved route, and placed along the curved route.

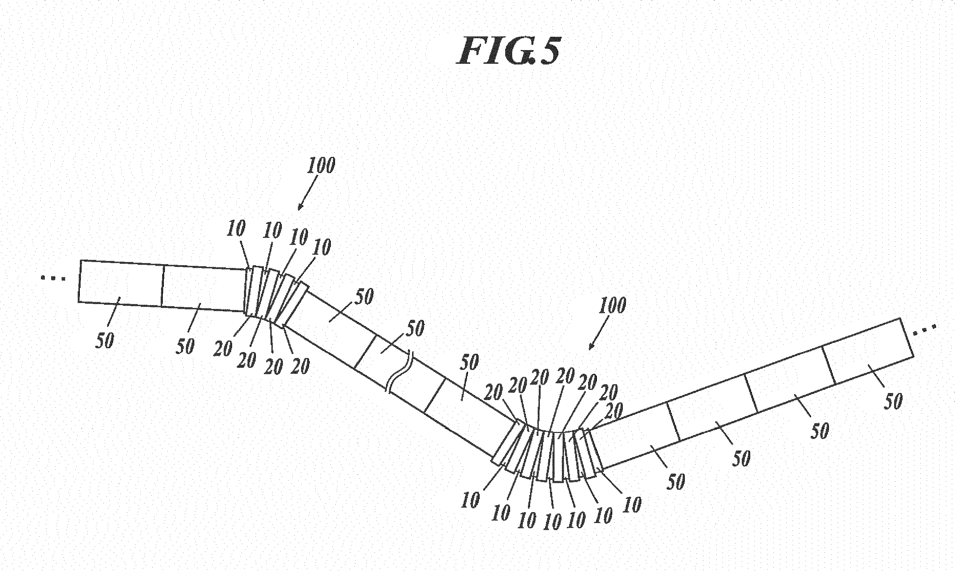

As illustrated in Fig. 5, long cable troughs 50 can be coupled and placed in the longitudinal direction along linear routes, whereas the cable troughs 100 for corners can be placed along curved routes and coupled to adjoining cable troughs 50 at the two ends, for example.

The number of female troughs 20 and male troughs 10 to be coupled can be adjusted in accordance with the curvature (bending angle) of the curved route along which the cable troughs 100 for corners are to be placed. For example, as illustrated in Fig. 5, the bending angle of the cable trough 100 for corners can be increased by increasing the number of female troughs 20 and the male troughs 10 of the cable trough 100 for corners.

Even with the same number of female troughs 20 and male troughs 10 of the cable trough 100 for corners, the bending angle of the cable trough 100 for corners can be adjusted by adjusting the orientations (angles) of the female troughs 20 and the male troughs 10. For example, a small angle between one of the female troughs 20 and the adjacent male trough 10 defines a small bending angle of the cable trough 100 for corners, whereas a large angle between one of the female troughs 20 and the adjacent male trough 10 defines a large bending angle of the cable trough 100 for corners.

Such a cable trough 100 for corners according to this embodiment can be bent in accordance with the curvature (bending angle) of the route along which the cable trough 100 for corners is to be placed, to readily place the cable trough 100 for corners along the curved route.

In the embodiment described above, when one first side wall 12 (the first side wall 12 on the right in the drawing) moves to the interior of the female trough body 23 at an angle to the second side walls 22, the movement of the side beam 12a of the other first side wall 12 (the first side wall 12 on the left in the drawing), which moves relative to the other first side wall 12, is restricted by the corresponding side groove 22a, and when the other first side wall 12 (the first side wall 12 on the left in the drawing) moves to the interior of the female trough body 23 at an angle to the second side walls 22, the movement of the side beam 12a of the one first side wall 12 (the first side wall 12 on the right in the drawing), which moves relative to the other first side wall 12, is restricted by the corresponding side groove 22a. Thus, the cable trough 100 for corners can be bent toward the left or right along an installation direction of the cable troughs. In addition, the cable trough 100 for corners can be bent in a vertical direction with respect to an installation direction of the cable troughs.

As described above, the bottom protrusions 11a of the male trough bodies 13 are movably fit with the corresponding bottom depressions 21a of the female trough bodies 23, and the lid protrusions 15a of the first lid 15 are movably fit with the corresponding lid depressions 25a of the second lid 25.

When the first bottom wall 11 moves to the interior of the female trough body 23 at an angle to the second bottom walls 21, the movement of the lid protrusions 15a of the first lid 15, which move relative to the first bottom wall 11, is restricted by the corresponding lid depression 25a, and when the first lid 15 moves to the interior of the female trough body 23 at an angle to the second lid 25, the movement of the bottom protrusions 11a of the first bottom wall 11, which move relative to the first lid 15, is restricted by the corresponding bottom depressions 21a. In such a configuration, the cable trough 100 for corners can be bent in the vertical direction with respect to the installation direction of the cable troughs.

When the cable trough 100 for corners is bent in the vertical direction with respect to the installation direction of the cable troughs, the upper and lower edges of the side beams 12a, which fit with the corresponding side grooves 22a, come into contact with the corresponding side grooves 22a so as to restrict the movement of the side beams 12a.

The advantageous effect of the cable trough 100 for corners according to this embodiment as a bendable assembly will be described.

As described above, the cable trough 100 for corners is an assembly including alternatingly coupled male troughs 10 each having male joints 13a at the two ends and female troughs 20 having female joints 23a at the two ends.

In contrast, cable troughs 70 each including a male joint 70a at one end and a female joint 70b at the other end are assembled into an assembly by coupling the male joints 70a and the female joints 70b, and the assembly is compared with the cable trough 100 for corners according to this embodiment.

The area between the male joint 70a and the female joint 70b of each of the cable troughs 70 is defined as a trough body 70c.

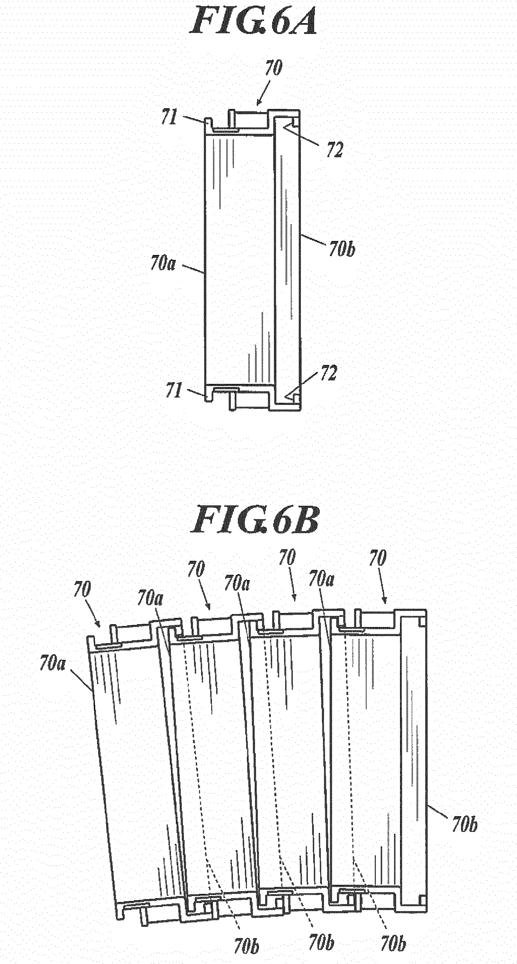

With reference to Fig. 6A, the cable trough 70 includes a male joint 70a having coupling protrusions 71 and a female joint 70b having coupling depressions 72. The coupling protrusions 71 are designed such that the movement of the coupling protrusions 71 is restricted by the respective coupling depressions 72 and the coupling protrusions 71 are movably fit with the respective coupling depressions 72, in a coupled state of the male joint 70a and the female joint 70b.

Four cable troughs 70 are coupled by inserting the male joints 70a into the respective female joints 70b to form the assembly of the cable troughs 70 illustrated in Fig. 6B. The bending angle of the assembly is smaller than that of the cable trough 100 for corners.

Cable troughs 80 having a larger bending angle in an assembly are also prepared.

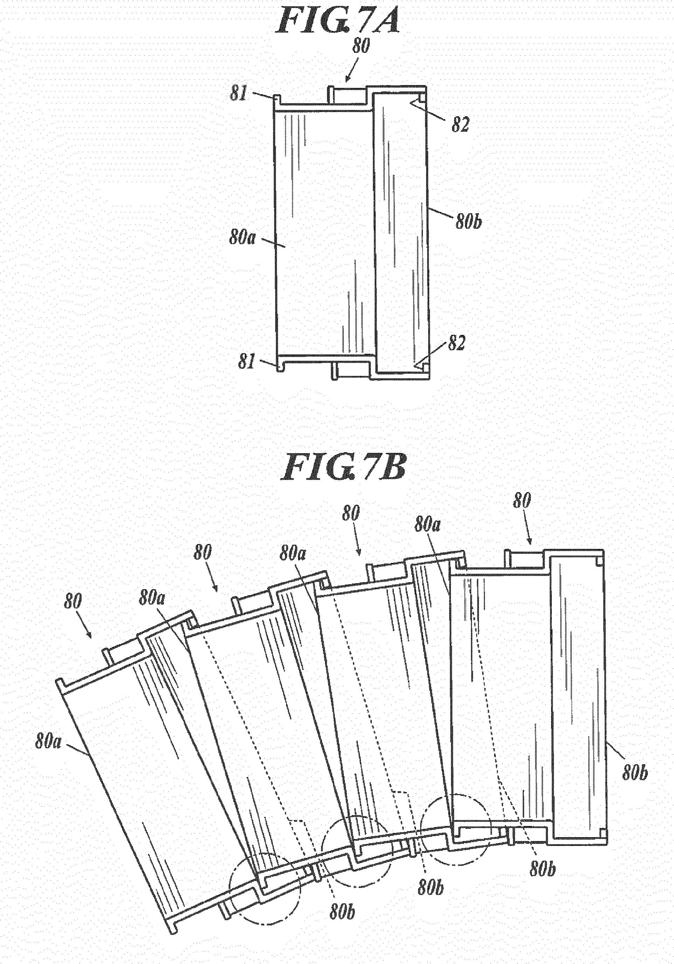

With reference to Fig. 7A, the cable trough 80 includes a male joint 80a having coupling protrusions 81 at one end and a female joint 80b having coupling depressions 82 at the other end. The area between the male joint 80a and the female joint 80b of each of the cable troughs 80 is defined as a trough body 80c.

The cable trough 80 includes a trough body 80c having the same dimensions as those of the trough body 70c of the cable trough 70 and has a total length from the edge of the male joint 80a to the edge of the female joint 80b that is larger than that of the cable trough 70. That is, the cable trough 80 is designed such that, although the movement of the coupling protrusions 81 is restricted by the respective coupling depressions 82, the areas of the coupling depressions 82 within which the coupling protrusions 81 are movable are larger than those in the cable trough 70, in a coupled state of the male joint 80a and the female joint 80b.

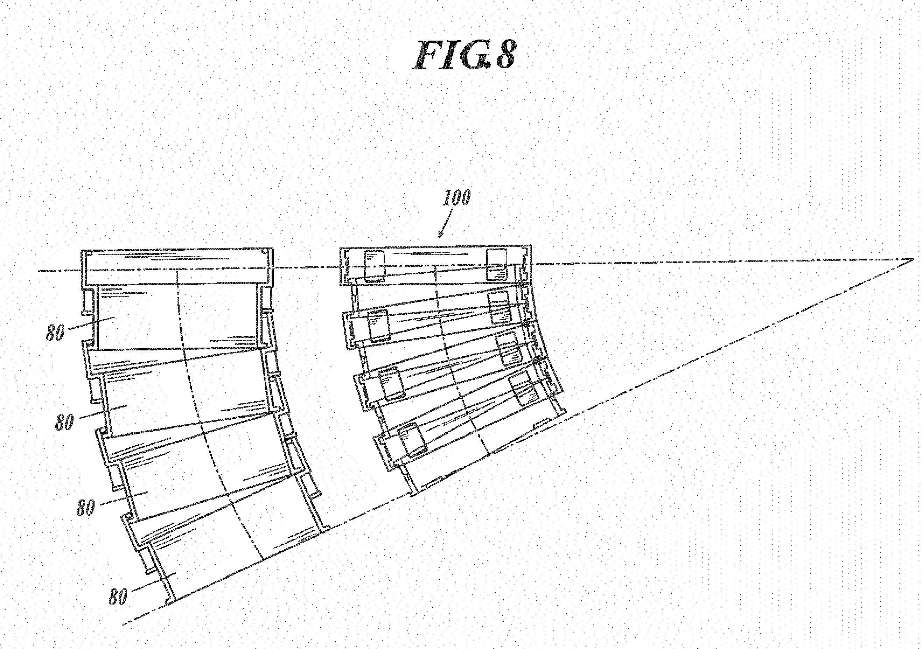

Four cable troughs 80 are coupled by inserting the male joints 80a into the respective female joints 80b to form the assembly of the cable troughs 80 illustrated in Fig. 7B. The bending angle of the assembly is larger than that of the assembly of the cable troughs 70 but smaller than that of the cable trough 100 for corners. In specific, the radius of curvature of the assembly of the cable troughs 80 is larger than that of the cable trough 100 for corners, and the bending angle is smaller than that of the cable trough 100 for corners, as illustrated in Fig. 8.

It has been discovered that when bending the assembly of the cable troughs 80 each having a total length larger than that of the cable trough 70, the inner corners of the male joints 80a protrude to the interior of the respective cable troughs 80 and reduce the inner space of the cable troughs 80, as illustrated in the dashed circles in Fig. 7B. The cables disposed inside the cable troughs 70 might even be damaged by the inner corners of the male joints 80a that protrude to the interior.

In contrast, the cable trough 100 for corners including the male troughs 10 each having the male joints 13a at the two ends and the female troughs 20 each having the female joints 23a at the two ends does not reduce the inner space even when it is bent, and can bent at a relatively large bending angle.

In this way, the cable trough 100 for corners including the male troughs 10 each equipped with the male joints 13a at the two ends and the female troughs 20 each equipped with the female joints 23a at the two ends can bend at a relatively large bending angle. Thus, the cable trough 100 for corners is more advantageous than the assemblies of the cable troughs 70 and 80 each having a male joint at one end and a female joint at the other end.

As described above, the cable trough 100 for corners according to this embodiment can bend at a relatively large bending angle and be readily placed along a curved route.

In the embodiments described above, the cable trough 100 for corners includes three female troughs 20 and three male troughs 10 alternatingly coupled as illustrated in Fig. 1, four female troughs 20 and four male troughs 10 alternatingly coupled as illustrated in Fig. 5, or seven female troughs 20 and seven male troughs 10 alternatingly coupled as illustrated in Fig. 5. The present invention should not be limited to these embodiments, and the cable trough 100 for corners may include any number of female troughs 20 and male troughs 10.

### Industrial applicability

The present invention having the configuration described above can be suitably used as a cable trough for corners, which is to be placed along a curved route.

### Description of Reference Numerals

- 10: male trough
- 11: first bottom wall
- 11a: bottom protrusion
- 12: first side wall
- 12a: side beam
- 12b: projection
- 13: male trough body
- 13a: male joint
- 15: first lid
- 15a: lid protrusion
- 15b: engaging chase
- 20: female trough
- 21: second bottom wall
- 21a: bottom depression
- 22: second side wall
- 22a: side groove
- 22b: engaging recess
- 22c: engagement
- 23: female trough body
- 23a: female joint
- 25: second lid
- 25a: lid depression
- 25b: projection
- 25c: long groove
- 26: lid fixing member
- 26a: engaging end
- 100: cable trough for corners

## Claims

1. A cable trough for corners (100), comprising:
a male trough body (13) including a first bottom wall (11), a pair of first side walls (12), and male joints (13a) including side beams (12a) protruding externally from both edges of an external face of each of the first side walls (12),
a female trough body (23) including a second bottom wall (21), a pair of second side walls (22), and female joints (23a) including side grooves (22a) into which the side beams (12a) are fitted, respectively, at both edges of an inner face of each of the second side walls (22), wherein
the male trough body (13) and the female trough body (23) are alternatingly coupled to each other by connecting the male joints (13a) with the female joints (23a),
when one of the first side walls (12) moves to an interior of the female trough body (23) at an angle to the second side walls (22), a movement of at least one of the side beams (12a) of another of the first side walls (12) is restricted by at least one of the side grooves (22a) into which the at least one of the side beams (12a) is fitted, the another of the first side walls (12) moving relative to the one of the first side walls (12),
when the another of the first side walls (12) moves to the interior of the female trough body (23) at an angle to the second side walls (22), a movement of at least one of the side beams (12a) of the one of the first side walls (12) is restricted by at least one of the side grooves (22a) into which the at least one of the side beams (12a) is fitted, the one of the first side walls (12) moving relative to the another of the first side walls (12), and
the male trough body (13) and the female trough body (23) are coupled such that an orientation of the male trough body (13) and an orientation of the female trough body (23) are variable relative to each other,
the cable trough (100) is **characterized by:** a first lid (15) disposed across the pair of first side walls (12) on the male trough body (13); and a second lid (25) disposed across the pair of second side walls (22) on the female trough body (23), wherein
the first bottom wall (11) has a lower face having bottom protrusions (11a) protruding downward from both edges of the lower face, and the second bottom wall (21) of the female trough body (23) has an upper face having a bottom depression (21a) into which the bottom protrusions (11a) are inserted, and
the first lid (15) has an upper face having lid protrusions (15a) protruding upward from both edges of the upper face, and the second lid (25) has a lower face having a lid depression (25a) into which the lid protrusions (15a) are inserted, and
the bottom protrusions (11a) are movably inserted into the bottom depression (21a), and the lid protrusions (15a) are movably inserted into the lid depression (25a).

2. The cable trough for corners (100) according to claim 1, wherein
the first bottom wall (11) and the first lid (15) are aligned in a vertical direction by fixing the first side walls (12) of the male trough body (13) and the first lid (15) to one another by engaging engaging chases (15b) at both ends of the first lid (15) in a longitudinal direction with projections (12b) on top faces of the first side walls (12) of the male trough body (13), and
the second bottom wall (21) and the second lid (25) are aligned in the vertical direction by fixing the second side walls (22) of the female trough body (23) and the second lid (25) to one another by engaging projections (25b) at both ends of the lower face of the second lid (25) in the longitudinal direction with engaging recesses (22b) of the second side walls (22) of the female trough body (23).

3. The cable trough for corners (100) according to claim 1 or 2, further comprising:
a lid fixing member (26) which fixes the second lid (25) to the female trough body (23).

4. The cable trough for corners (100) according to any of claims 1 to 3, wherein
the male joints (13a) are formed on both edge faces of the male trough body (13), the female joints (23a) are formed on both edge faces of the female trough body (23), and the male trough body (13) and female trough body (23) are alternatingly coupled to each other by connecting the male joints (13a) with the female joints (23a).

## Patentansprüche

1. Ein Kabelkanal für Ecken (100), umfassend:
einen männlichen Rinnenkörper (13) mit einer ersten Bodenwand (11), einem Paar erster Seitenwände (12) und männlichen Gelenken (13a) mit Seitenbalken (12a), die nach außen aus beiden Kanten einer Außenfläche von jeder der ersten Seitenwände (12) herausragen,
einen weiblichen Rinnenkörper (23) mit einer zweiten Bodenwand (21), ein Paar zweiter Seitenwände (22) und weibliche Gelenke (23a) mit Seitenrillen (22a), in die die Seitenbalken (12a) jeweils an beiden Kanten einer Innenfläche jeder der zweiten Seitenwände (22) eingepasst sind, wobei
der männliche Rinnenkörper (13) und der weibliche Rinnenkörper (23) abwechselnd miteinander verbunden sind, indem die männlichen Gelenke (13a) mit den weiblichen Gelenken (23a) verbunden werden,
wenn sich eine der ersten Seitenwände (12) in einem Winkel zu den zweiten Seitenwänden (22) zu einem Inneren des weiblichen Rinnenkörpers (23) bewegt, wird eine Bewegung von mindestens einem der Seitenbalken (12a) einer anderen von den ersten Seitenwänden (12) durch mindestens eine der Seitenrillen (22a) begrenzt, in die der mindestens eine der Seitenbalken (12a) eingepasst ist, wobei sich die andere der ersten Seitenwände (12) relativ zu der einen der ersten Seitenwände (12) bewegt,
wenn sich die andere der ersten Seitenwände (12) in einem Winkel zu den zweiten Seitenwänden (22) zum Inneren des weiblichen Rinnenkörpers (23) bewegt, wird eine Bewegung von mindestens einem der Seitenbalken (12a) der einen der ersten Seitenwände (12) durch mindestens eine der Seitenrillen (22a) begrenzt, in die der mindestens eine der Seitenbalken (12a) eingepasst ist, wobei sich die eine der ersten Seitenwände (12) relativ zu der anderen der ersten Seitenwände (12) bewegt und
der männliche Rinnenkörper (13) und der weibliche Rinnenkörper (23) sind so gekoppelt, dass eine Orientierung des männlichen Rinnenkörpers (13) und eine Orientierung des weiblichen Rinnenkörpers (23) relativ zueinander variabel sind,
der Kabelkanal (100) ist **gekennzeichnet durch:**
einen ersten Deckel (15), der über das Paar der ersten Seitenwände (12) am männlichen Rinnenkörper (13) angeordnet ist; und einen zweiten Deckel (25), der über das Paar von zweiten Seitenwänden (22) an dem weiblichen Rinnenkörper (23) angeordnet ist, wobei
die erste Bodenwand (11) eine Unterseite mit Bodenvorsprüngen (11a) hat, die von beiden Rändern der Unterseite nach unten vorstehen, und die zweite Bodenwand (21) des weiblichen Rinnenkörpers (23) eine Oberseite mit einem Bodenvertiefung (21a) hat, in die die Bodenvorsprüngen (11a) eingeführt sind, und
der erste Deckel (15) eine Oberseite mit Deckelvorsprüngen (15a) hat, die von beiden Kanten der Oberseite nach oben ragen, und der zweite Deckel (25) eine Unterseite mit einer Deckelvertiefung (25a) hat, in die die Deckelvorsprünge (15a) eingefügt werden, und
die Bodenvorsprünge (11a) sind beweglich in die Bodenvertiefung (21a) eingeführt, und die Deckelvorsprünge (15a) sind beweglich in die Deckelvertiefung (25a) eingeführt.

2. Der Kabelkanal für Ecken (100) gemäß Anspruch 1, wobei
die erste Bodenwand (11) und der erste Deckel (15) in vertikaler Richtung ausgerichtet sind, indem die ersten Seitenwände (12) des männlichen Rinnenkörpers (13) und der erste Deckel (15) durch Eingreifen von Eingriffskanälen (15b) an beiden Enden des ersten Deckels (15) in Längsrichtung mit Vorsprüngen (12b) an den Oberseiten der ersten Seitenwände (12) des männlichen Rinnenkörpers (13) miteinander verbunden werden und
die zweite Bodenwand (21) und der zweite Deckel (25) in vertikaler Richtung ausgerichtet sind, indem die zweiten Seitenwände (22) des weiblichen Rinnenkörpers (23) und der zweite Deckel (25) durch Eingreifen von Eingriffsvorsprüngen (25b) an beiden Enden der Unterseite des zweiten Deckels (25) in Längsrichtung mit Eingriffsaussparungen (22b) der zweiten Seitenwände (22) des weiblichen Rinnenkörpers (23) aneinander befestigt werden.

3. Der Kabelkanal für Ecken (100) gemäß Anspruch 1 oder 2, wobei, des weiteren umfassend:
ein Deckelbefestigungselement (26), das den zweiten Deckel (25) an dem weiblichen Rinnenkörper (23) befestigt.

4. Der Kabelkanal für Ecken (100) gemäß einem der Ansprüche 1 bis 3, wobei
die männlichen Gelenke (13a) an beiden Randflächen des männlichen Rinnenkörpers (13) ausgebildet sind, die weiblichen Gelenke (23a) an beiden Randflächen des weiblichen Rinnenkörpers (23) ausgebildet sind und der männlichen Rinnenkörper (13) und weiblicher Rinnenkörper (23) abwechselnd miteinander gekoppelt sind, indem die männlichen Gelenke (13a) mit den weiblichen Gelenken (23a) verbunden werden.

## Revendications

1. Chemin de câbles pour coins (100) comprenant :
un corps mâle de chemin (13) incluant une première paroi de fond (11), une paire de premières parois latérales (12) et des joints mâles (13a) incluant des montants latéraux (12a) faisant saillie à l'extérieur des deux bords de la face externe de chacune des premières parois latérales (12),
un corps femelle de chemin (23) incluant une seconde paroi de fond (21), une paire de secondes parois latérales (22) et des joints femelles (23a) incluant des rainures latérales (22a) dans lesquelles sont adaptés respectivement les montants latéraux (12a) aux deux bords de la face interne de chacune des secondes parois latérales (22), où
le corps mâle de chemin (13) et le corps femelle de chemin (23) sont accouplés en alternance l'un à l'autre en reliant les joints mâles (13a) avec les joints femelles (23a),
lorsque l'une des premières parois latérales (12) se déplace vers l'intérieur du corps femelle de chemin (23) à un certain angle avec les secondes parois latérales (22), le mouvement d'au moins l'un des montants latéraux (12a) de l'autre des premières parois latérales (12) est limité par au moins l'une des rainures latérales (22a) dans laquelle sont adaptés le ou les montants parmi les montants latéraux (12a), l'autre des premières parois latérales (12) se déplaçant par rapport à celle parmi les premières parois latérales (12),
lorsque que l'autre des premières parois latérales (12) se déplace vers l'intérieur du corps femelle de chemin (23) à un certain angle avec les secondes parois latérales (22), le mouvement d'au moins l'un des montants latéraux (12a) de la ou des premières parois latérales (12) est limité par au moins l'une des rainures latérales (22a) dans laquelle sont adaptés le ou les montants parmi les montants latéraux (12a), celle des premières parois latérales (12) se déplaçant par rapport à l'autre des premières parois latérales (12), et
le corps mâle de chemin (13) et le corps femelle de chemin (23) sont accouplés de sorte à ce que l'orientation du corps mâle de chemin (13) et l'orientation du corps femelle de chemin (23) puissent varier l'une par rapport à l'autre,
le chemin de câbles (100) est **caractérisé par :** un premier couvercle (15) disposé de part et d'autre de la paire de premières parois latérales (12) sur le corps mâle de chemin (13), ainsi que par un second couvercle (25) disposé de part et d'autre de la paire de secondes parois latérales (22) sur le corps femelle de chemin (23), où
la première paroi de fond (11) possède une face inférieure comportant des protubérances de fond (11a) en saillie vers le bas depuis les deux bords de la face inférieure, et la seconde paroi de fond (21) du corps femelle de chemin (23) possède une face supérieure présentant une dépression de fond (21a) dans laquelle sont insérées les protubérances de fond (11a), et
le premier couvercle (15) possède une face supérieure comportant des protubérances de couvercle (15a) en saillie vers le haut depuis les deux bords de la face supérieure, et le second couvercle (25) possède une face inférieure comportant une dépression de couvercle (25a) dans laquelle sont insérées les protubérances de couvercle (15a), et
les protubérances de fond (11a) sont insérées tout en pouvant bouger dans la dépression de fond (21a) et les protubérances de couvercle (15a) sont insérées tout en pouvant bouger dans la dépression de couvercle (25a).

2. Chemin de câbles pour coins (100) selon la revendication 1, dans lequel :
la première paroi de fond (11) et le premier couvercle (15) sont alignés dans la direction verticale en fixant les premières parois latérales (12) du corps mâle de chemin (13) et le premier couvercle (15) les uns aux autres en mettant en prise des frettes d'assujettissement (15b) aux deux extrémités du premier couvercle (15) dans la direction longitudinale avec les protubérances (12b) se trouvant sur les faces supérieures des premières parois latérales (12) du corps mâle de chemin (13), et
la seconde paroi de fond (21) et le second couvercle (25) sont alignés dans la direction verticale en fixant les secondes parois latérales (22) du corps femelle de chemin (23) et le second couvercle (25) les uns aux autres en mettant en prise des protubérances (25b) aux deux extrémités de la face inférieure du second couvercle (25) dans la direction longitudinale avec les évidements de mise en prise (22b) des secondes parois latérales (22) du corps femelle de chemin (23).

3. Chemin de câbles pour coins (100) selon la revendication 1 ou la revendication 2, comprenant en outre :
un élément de fixation de couvercle (26) qui fixe le second couvercle (25) sur le corps femelle de chemin (23).

4. Chemin de câbles pour coins (100) selon l'une quelconque des revendications 1 à 3, dans lequel :
les joints mâles (13a) sont formés sur les deux faces des bords du corps mâle de chemin (13), les joints femelles (23a) sont formés sur les deux faces des bords du corps femelle de chemin (23), et le corps mâle de chemin (13) et le corps femelle de chemin (23) sont accouplés en alternance l'un à l'autre en raccordant les joints mâles (13a) avec les joints femelles (23a).
